# EUROPEAN PATENT SPECIFICATION

(11) **EP 1 600 330 B1**
(45) Date of publication and mention of the grant of the patent: **13.05.2009**
(21) Application number: 04076501.8
(22) Date of filing: 21.05.2004
(51) Int. Cl.: B60R 7/00

(54) **Roller shutter with sliding elements**
Jalousietor aus gleitenden Lamellen
Rideau à lamelles coulissantes

(43) Date of publication of application: 30.11.2005
(73) Proprietor: Ford Global Technologies, LLC, Dearborn, MI 48126 (US)
(72) Inventor: Gunnar Johansson, 444 60 Stora Höga (SE)
(74) Representative: Andersson, Per Rune

(56) References cited:
- DE-A- 10 244 301
- DE-B- 1 155 897
- US-A1- 2002 005 424
- US-B2- 6 499 785

## Description

### TECHNICAL FIELD

The invention refers to a roller shutter for screening an opening in a storage compartment in a transport device. The opening has an extension in a width direction and a sliding direction where the width direction is essentially perpendicular to the sliding direction. The shutter comprises a number of sliding elements extending in the width direction and in the sliding direction. The sliding elements are assembled in parallel enabling the shutter to be bendable in the sliding direction.

### BACKGROUND ART

In the field of storage compartments for transport devices such as automobiles, airplanes etc, it is known to use roller shutters for screening an opening. For example, US 6499785 teaches a roller shutter for screening an opening in a storage compartment in a transport device. The shutter comprises a number of flat sliding elements extending in a width direction and in a sliding direction essentially perpendicular to the width direction. The sliding elements are assembled in parallel enabling the shutter to be bendable in the sliding direction.

One problem with the shutter according to US 6499785 is that the shutter cannot withstand a substantial surface load, for example from a person leaning against the shutter when the shutter screens the opening. Of course this could be rectified by the use of a special material or by making the shutter of a thicker material. However, special materials are expensive and it is essential to keep the material cost as low as possible when manufacturing transport devices since the competition is high. Suitable materials are thus plastic and plastic materials which may be coated by any desired material, for example a light metal such as aluminium.

Further, DE 1155897 B teaches a roller shutter for screening an opening, each sliding element being convex in the width direction to withstand a certain surface load.

Furthermore, it is important to keep each component in a transport device as light as possible due to the desire to keep the fuel consumption as low as possible. Therefore, it is not suitable to size up components such as roller shutters in order for it to withstand a greater load.

There is thus a need for an improved roller shutter that can withstand a greater surface load than previously known roller shutters.

### DISCLOSURE OF INVENTION

The object of the present invention is to find an improved roller shutter for screening an opening in a storage compartment in a transport device such as an automobile, airplane or the like, that can withstand a greater surface load than previously known roller shutters. In the following text, storage compartment refers to a housing encompassing a cavity/compartment space for storing assorted articles, for example, glasses, tapes, compact discs, telephones, car stereo, etc. The storage compartment has at least one opening through which the articles are brought into the compartment space. The opening extends in a sliding direction essentially perpendicular to a width direction. The roller shutter according to the invention is especially suitable for use in a storage compartment with an opening extending horizontally.

The roller shutter refers to a hinged doorlike cover being slidably housed in the compartment. The shutter may be slid between a buffered position in a buffer section and a screening position, the former being a position when the opening is exposed and the latter being the position when the opening is screened by the shutter.

The shutter is arranged to be slid in the sliding direction between the buffered position and the screening position. The sliding direction may follow a curvature which enables the opening to describe a two dimensional flat surface or a three dimensional surface in the sliding direction, for example a convex surface.

The buffer section is preferably arranged such that a part of the shutter is buffered at an angle to the opening and such that the rest of the shutter is buffered essentially parallel to the opening.

In order to explain the sliding direction, an orthogonal system is here defined by three orthogonal axes extending in three directions, for example, X-direction, Y-direction, and Z-direction. Compared to the orthogonal system, the sliding direction according to the invention may alter direction from strictly coinciding with the Y-direction to strictly coincide with the Z-direction, or the opposite Z-direction, or anything there between. Here, the width direction coincides with the X-direction. If the opening describes a flat surface, the opening extends in the X-direction and the Y-direction.

The shutter comprises a number of sliding elements extending in the width direction, a thickness direction and in the sliding direction. The width direction is substantially perpendicular to the sliding direction and the thickness direction is substantially perpendicular to the width direction.

The sliding elements are assembled in parallel enabling the shutter to be bendable in the sliding direction. The sliding elements may be regarded as cantilever beams that function as vertebrates when assembled into the roller shutter.

The invention is achieved by a roller shutter according to claim 1. Each sliding element comprises a convex subarea being convex in the width direction. The sliding elements are positioned relative each other such that the convex subareas give the shutter a convex surface in the width direction when screening the opening. The convex surface is convex as seen from the outside of the compartment.

Due to the convex structure, the convex surface has the benefit of being able to withstand a greater surface load than the previously known shutters with substantially flat surfaces. One further advantage is that the increased load bearing ability gives the possibility to use less material for a shutter at a given load for a shutter with a flat surface. Yet a further advantage is that the convex surface gives the possibility to mould the shutter into a new aesthetically pleasing shape.

The convex surface is arranged to absorb a surface load acting on the surface and to distribute said load over at least a part of the surface without deformation of said surface. The convex form distributes the load in at least the width direction and the thickness direction.

In one embodiment of the invention, each sliding element has first and second end walls extending in the sliding direction and the thickness direction and first and second side walls extending in the width direction and the thickness direction. The first and second side walls are preferably arranged at a predetermined distance from each other in the sliding direction. The sliding elements may comprise reinforcement means arranged between and in contact with the first and second side walls. The end walls and the side walls are connected to each other advantageously forming a rectangular bottom part of the sliding element.

The first side wall of one sliding element is in contact with the second side wall of a parallel sliding element when the shutter is in the screening position. The sliding elements are thus arranged stacked on each other with a close fit between the sliding elements. The close fit gives a frictional engagement between the sliding elements. The benefits of this embodiment lies in that the load bearing ability increases further compared to if there would have been a gap between each sliding element.

In another embodiment of the invention of the invention, the first and second side walls are arranged with engagement means for engaging engagement means of the side wall of a parallel sliding element when the shutter screens the opening. The engagement means may be in the form of protrusions from the first side wall of the sliding element and corresponding recesses on the second side wall. The engagement means may also occur in the form of beads, or flanges, or lips, or the like. The engagement means shall be arranged such that one side wall of one sliding element engages the side wall of the adjacent sliding element when the shutter is in the screening position. The engagement means shall also be arranged such that the first side wall of one sliding element may disengage from the second side wall of the adjacent sliding element when the shutter is in the buffered position or when the shutter is in the progress of being slid into the buffered position. The benefits of this embodiment lies in that the load bearing ability increases further compared to if there would have been a gap or friction between each sliding element. Another advantage is that the sliding elements are optimally aligned such that the convex surface becomes smooth and such that any pattern formed on the convex surface by part patterns on the sliding members becomes optimal.

In one embodiment of the invention, the bottom part of the sliding elements is attached to a bonding means in the form of a sheet of fabric coated with a layer of an adhesive substance adhering to the sliding elements. The bottom part comprises parts of the first and second side walls and the first and second end walls. The bonding means are arranged to hold the sliding elements together when the roller shutter is slid between the buffered position and the screening position.

The bonding means is preferably made from a non-elastic material bendable at least in the sliding direction. Such material may be made from a woven or nonwoven material. The bonding means may also be made from an adhesive substance sprayed onto the sliding elements when the sliding elements are arranged in a position corresponding to the position the sliding elements have when the roller shutter is in the screening position. The sprayed on substance then forms the bonding means after drying.

According to one embodiment of the invention, each sliding element has two opposing end subareas extending in the width direction and the sliding direction. Each end subarea transitions into the convex subarea. The end subareas, the first and second end walls, and parts of the first and second side walls define end sections that function as first guiding means slidably contacting second guiding means arranged in the compartment. The end subareas and the convex subarea may, in the sliding direction, be planar or may have a convex or concave curvature dependent on the curvature described by the opening.

In another embodiment of the invention, each sliding element has two opposing inclined subareas placed between the end subareas and the convex subareas. The inclined subareas incline in the width direction. The inclined subareas may, in the sliding direction, be planar or may have a convex or concave curvature dependent on the curvature described by the opening. The inclined subareas has the benefit of giving the sliding element amore aesthetically pleasing feature and may also give the roller shutter a better fit to the compartment.

The subareas are connected to each other as stated above and also connected to the side walls and the end walls such that the sliding element achieves a beam-like structure.

In one embodiment of the invention, each end section is equipped with first guiding means extending from the end sections in the width direction, i.e. extending from the first and second end walls in the width direction. The first guiding means slidably contact the second guiding means. The first guiding means are preferably made from a material with low friction in relation to the second guiding means. The first guiding means may be cubic, or spherical, or egg shaped or any other suitable form giving rise to a low friction surface.

In one embodiment of the invention, the first guiding means may comprise upper and lower gliding means covering parts of or the entire first guiding means in the thickness direction, but may also comprise a number of gliding means placed along the extension of each end section. The gliding means may be shaped in any suitable form, for example cubic, wedge shaped, cylindrical, oval shaped, or any other shape suitable for a low friction surface.

According to one embodiment of the invention, the shutter is slidably housed in the storage compartment via second guiding means. The second guiding means extend in the sliding direction and are arranged on either side of the opening and then transitions into a curbed configuration when the opening transitions into the buffer section. The second guiding means thus follows the contour of the opening and the buffer section. The buffer section may be formed in a flat state except for a curbed transition part between the opening and the rest of the buffer section, or may be curbed in its entirety.

The second guiding means are preferably formed with a cross-section in the form of an open square, or a horse shoe, or any other shape suitable for housing the first guiding means. The second guiding means thus has a bottom portion extending in the sliding direction between two side portions. The side portions are essentially parallel extending from the bottom portion in the width direction. The second guiding means may be in the form of a guiding rail or a recess or any other guiding means suitable for guiding the shutter. The end portions are not intended to take up any substantial forces acting in the width direction, but is arranged to guide each sliding element in the sliding direction.

In the above described embodiments, the first guiding means and the end sections, may in the width direction slidably contact the bottom portion, i.e. the first guiding means may be butt against the bottom portion. Furthermore, the second guiding means are arranged to use the side portions for walling the first guiding means and/or the end sections in the sliding direction when the shutter is slid between the screening position and the buffer position.

In order to simplify the presentation of data regarding the components comprised in the invention, such data will be presented in connection to the drawings below.

### BRIEF DESCRIPTION OF DRAWINGS

The invention will below be described with reference to a number of figures, where;
Fig. 1 schematically shows a top view of a storage compartment equipped with a roller shutter according to the invention;
Fig. 2 schematically shows a top view of a roller shutter according to the invention;
Fig. 3a schematically shows a top view of a sliding element according to a first embodiment of the invention;
Fig. 3b schematically shows a side view of a sliding element according to the invention along the cross-section line 3b-3b in figure 2;
Fig. 4 schematically shows a side view of the storage compartment along the cross-section line IV-IV in figure 1;
Fig. 5 schematically shows a top view of a sliding element according to a second embodiment of the invention;
Fig. 6 schematically shows a magnification of the sliding element in fig. 3b and a number of denotations referring to data regarding the sliding element;
Fig. 7 schematically shows side view of the sliding element in fig. 6 and a number of denotations referring to data regarding the sliding element;
Fig. 8a schematically shows a bottom view of the sliding element in figure 3a according to one embodiment;
Fig. 8b schematically shows a bottom view of the sliding element in figure 3a according to another embodiment;
Fig. 8c schematically shows a bottom view of the sliding element in figure 3a according to yet another embodiment, and where;
Figure 9 schematically shows a side view of a sliding element 4 according to yet another embodiment of the invention.

### EMBODIMENTS OF THE INVENTION

In the drawings reference numbers used referring to the same details are used in all drawings.

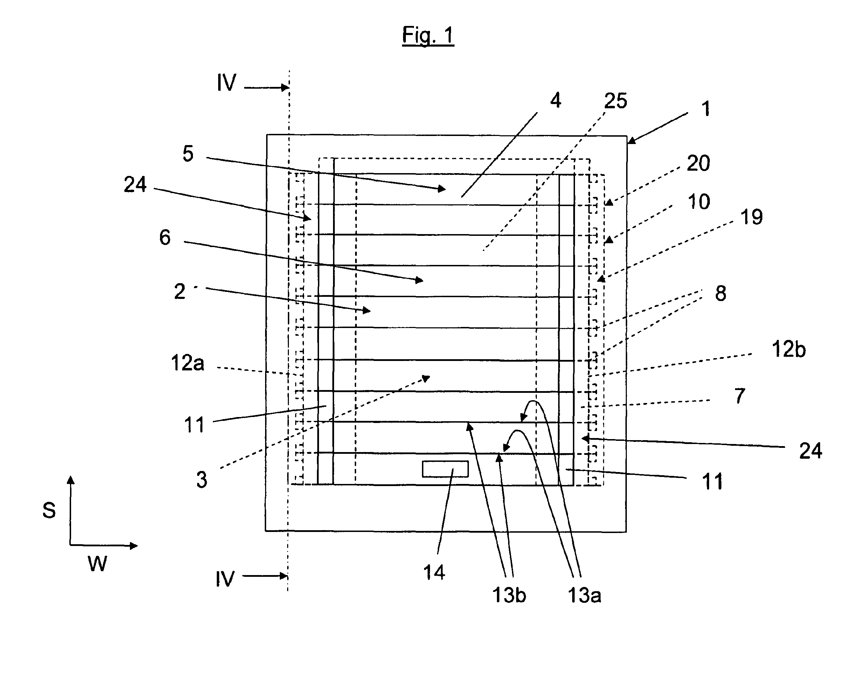

Fig. 1 schematically shows a top view of a storage compartment 1 equipped with a roller shutter 2 according to the invention. Here top view refers to a view from the outside of the compartment. The shutter 2 screens an opening 3 in the compartment 1 and is slidably housed in the storage compartment. In figure 1 the opening extends essentially in a horizontal direction. The shutter 2 comprises a number of sliding elements 4 extending in a width direction and in a sliding direction. In figure 1 the sliding direction is marked with an arrow S. In figure 1, the width direction is perpendicular to the sliding direction and is marked with an arrow W. Below references will be made to a thickness direction. The thickness direction is essentially orthogonal to the width direction and the sliding direction, i.e. essentially perpendicular to the width direction and a tangent to the sliding direction.

Each sliding element 4 comprises a convex subarea 5, being convex in the width direction. The convex subareas 5 together form a convex surface 6 being convex in the width direction when the shutter 2 screens the opening 3. Each sliding element comprises two opposing first and second end walls 12a, 12b extending in the thickness direction and the sliding direction. Each sliding element 4 also comprises two opposing first and second side walls 13a, 13b extending in the width direction and in the thickness. The sliding elements also comprises two opposing end subareas 7 extending in the sliding direction and the width direction. The end subareas 7 together with the first and second end walls 12a, 12b and parts of the first and second side walls 13a, 13b, form two opposing end sections 24. In figure 1, the first and second end walls 12a, 12b are equipped with first guiding means 8 extending from the first and second end walls 12a, 12b in the width direction.

The sliding elements 4 are slidably arranged in second guiding means 10 via the first guiding means 8. The second guiding means 10 are arranged on each side of the opening 3 and extend in the sliding direction. In figure 1 the first guiding means 8 and at least parts of the end sections 24 are positioned within the second guiding means 10. Figure 1 shows the second guiding means 10 in the form of a guiding rail formed with a cross-section in the form of an open square. The second guiding means 10 thus has a bottom portion 19 extending in the sliding direction and extending between two side portions 20.

In figure 1 the sliding elements 4 are equipped with outwardly inclined subareas 11 between the end subarea 7 and the convex subarea 5. The inclined subarea 7 is a transition area between the end subarea 7 and the convex subarea 5. In figure 1 the subareas 5, 7 and 11 are planar in the sliding direction. In figure 1 the opening 3 is planar which means that the second guiding means 10 extending on both sides of the opening 3, in the sliding direction, has a planar extension at this part of the compartment. The planar subsurfaces 5, 7, 11 thus describe a planar surface 6 in the sliding direction and a convex surface 6 in the width direction, when the shutter 2 screens the opening 3.

In figure 1, the side wall 13a of each sliding element 4 is in contact with the side wall 13b of a parallel sliding element 4 when the shutter 2 screens the opening 3. The sliding elements 4 are thus arranged stacked on each other in the sliding direction with a close fit between the sliding elements 4.

In figure 1 one sliding element 4 is equipped with a handle 14 intended to be used by a person when opening and closing the shutter door. The handle 14 may be a recess or an elevated portion suitable for gripping.

Figure 1 shows that the sliding elements 4 are attached to a bonding means 25 in the form of a sheet of fabric with a layer of adhesive substance adhering to the sliding elements.

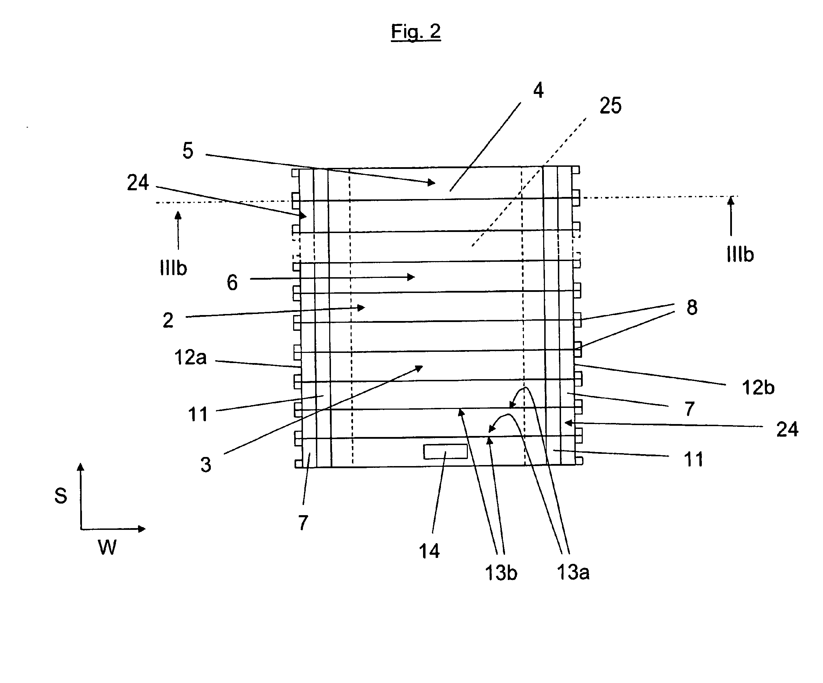

Fig. 2 schematically shows a top view of a roller shutter 2 according to the invention. The shutter 2 in figure 2 is the same shutter as described in figure 1, but without the storage compartment 1 shown in figure 1. The end subareas 7 together form end surfaces extending in the sliding direction. The inclined subareas 11 together form inclined surfaces extending in the sliding direction. Other reference numbers shown refers to details already described in connection to fig. 1.

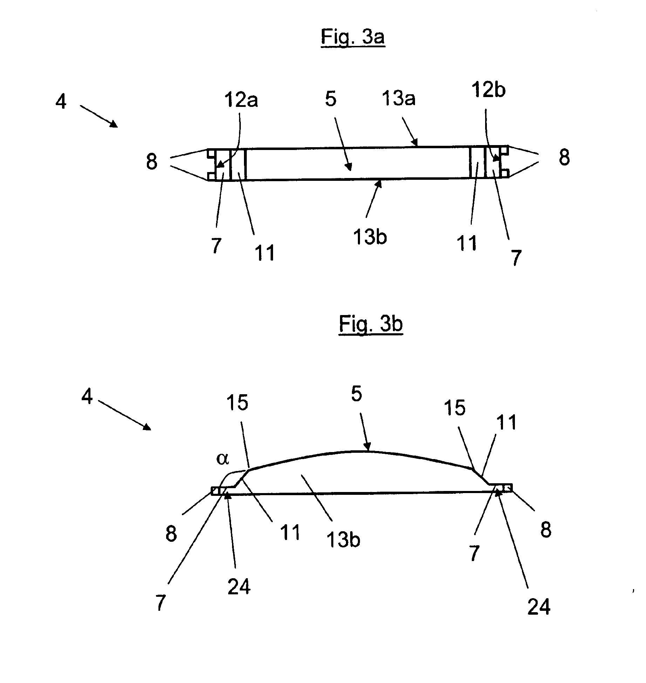

Fig. 3a schematically shows a top view of a sliding element 4 according to a first embodiment of the invention. The sliding element 4 in figure 3a may be used in the roller shutter 2 shown in figure 1 and 2. When the sliding elements 4 are stacked as in figure 1 or 2, the side wall 13a of each sliding element 4 is in close contact with the side wall 13b of a parallel sliding element when the shutter 2 screens the opening. The close fit between the sliding elements 4 gives a frictional engagement between the sliding elements 4.

Fig. 3b schematically shows a side view of a sliding element 4 according to the invention along the cross-section line 3b-3b in figure 2. The sliding element 4 in figure 3b is thus a side view of the sliding element 4 in figure 3a. In figure 3b, the inclined subarea 11 is a plane subarea arranged at an angle α to the planar end subarea 7. The inclined subarea 11 transitions into the convex subarea 5 at a point 15 at a predetermined distance from the end wall 12a, 12b.

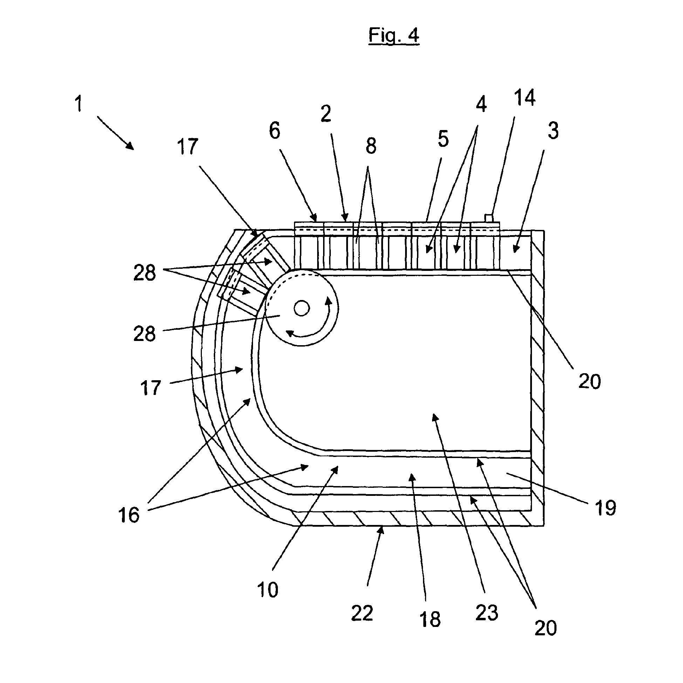

Fig. 4 schematically shows a side view of a storage compartment 1 along the cross-section line IV-IV in figure 1. The storage compartment 1 comprises a housing 22 defining a compartment space 23 enclosed by the housing 22 and the roller shutter 2, when the roller shutter 2 screens the opening 3 in the housing 22. The housing 22 may have any suitable form with a number of walls defining the shape. For example, the compartment may have a cubic form where the housing has five rigid walls at right angles to each other and the opening 3 of the compartment 1 is positioned where a sixth wall should be. However, the housing could have only three walls defining an essentially egg shaped or spherical cross-section, with a flat surface defining the opening 3.

In figure 4 the storage compartment comprises a buffer section 16 for storing the roller shutter 2 when the roller shutter is not screening the opening 3. The buffer section 16 is arranged at an angle to the opening 3 and follows a curved part 17 and a planar part 18. The opening 3 transitions into the buffer section 16 via the curved part 17. In figure 4 the second guiding means 10 extend on both sides of the opening 3 and then follows the curved part 17 and the planar part 18 of the buffer section 16.

Figure 4 shows a roller shutter 2 comprising nine sliding elements 4. In figure 4, the roller shutter is partly slid into the buffer section 16 and is partly screening the opening 3. In figure 4, the second guiding means 10 follows the curvature of the opening 3 and the buffer section 16.

Figure 4 shows the second guiding means 10 in the form of a guiding rail formed with a cross-section in the form of an open square. The second guiding means 10 thus has a bottom portion 19 extending in the sliding direction and between two side portions 20. The side portions 20 are essentially parallel extending from the bottom portion 19 and in the sliding direction and in the width direction. Figure 4 shows that the first guiding means 8 and at least a part of the end sections 24 are slidably housed in the second guiding means 10.

Figure 4 shows a third guiding means 28 over which the roller shutter 2 is guided in the transition from the opening 3 to the curved part 17 of the buffer section 16. The third guiding means 28 may be in the form of a pin extending over essentially the entire width of the roller shutter 2, and over which the roller shutter may glide. The third guiding means 28 may also be in the form of a rotating means extending over the entire width of the roller shutter 2, and over which the roller shutter may roll. The rotating means may comprise two or more wheels rotatably mounted on a shaft extending over essentially the entire width of the roller shutter 4.

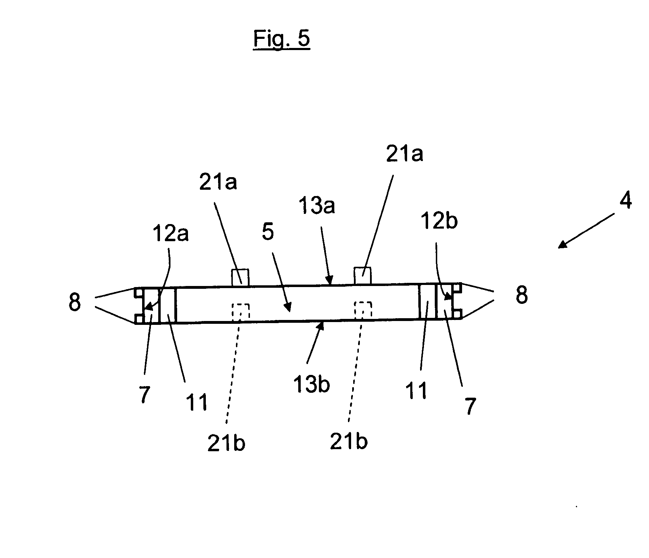

Fig. 5 schematically shows a top view of a sliding element according to a second embodiment of the invention. The sliding element 4 in figure 5 may be used in the roller shutter 2 shown in figure 1, 2 and 4. The sliding element 4 shown in figure 5 has all features shown in figures 3a and 3b, but is also equipped with engagement means in the form of protrusions 21 a extending from the first side wall 13a and corresponding recesses 21 b on the second side wall 13b. When the sliding elements 4 are stacked as in figure 1 or 2, the side wall 13a of each sliding element 4 is in close contact with the side wall 13b of a parallel sliding element when the shutter 2 screens the opening. When the first and second side walls 13a and 13b are in close contact, the corresponding engagement means 21 engages each other and gives a bonding arrangement between the sliding elements 4.

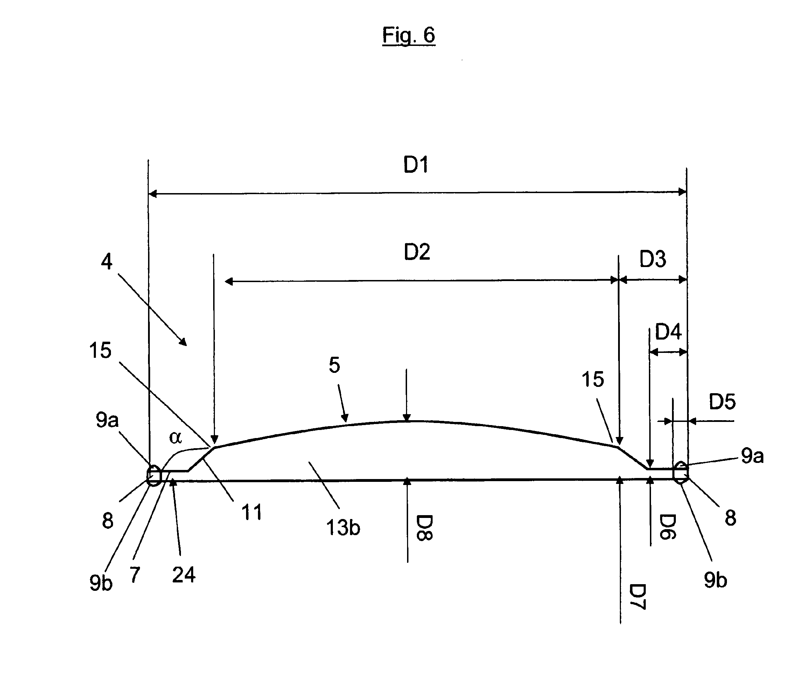

Fig. 6 schematically shows a magnification of the sliding element in fig. 3b and a number of denotations referring to data regarding the sliding element. In figure 6, it is shown that the first guiding means 8 comprises upper gliding means 9a and lower gliding means 9b placed opposite each other on the far ends of the planar end section 24 in the sliding direction.

The numbers within brackets below define an example of how a sliding element may be formed.

D1 refers to the total width of the sliding element 4. In figure 6 D1 is the distance between the first guiding means 8. D1 is between 80 and 210 mm (117 mm).

D2 refers to the width of the convex subarea 5. D2 is between 64 mm and 186 mm (100 mm).

D3 refers to the distance from the first guiding means 8 to the point 15 between the inclined subarea 11 and the curved subarea 5. D3 is between 7 and 12mm (8 mm).

D4 refers to the distance from the first guiding means 8 to the transition point between the end subarea 7 and the inclined subarea 11. D4 is between 5 and 7mm (5 mm).

D5 refers to the width of the first guiding means 8. D5 is between 0 and 4 mm (2.5 mm).

D6 refers to the thickness of the end section 24. D6 is between 3 and 5 mm (3.5 mm).

D7 refers to the thickness of the sliding element 4 in the point 15 between the inclined subarea 11 and the convex subarea 5. D7 is between 5 and 8 mm (6,5 mm).

D8 refers to the thickest part of the sliding element 4 and is taken at the apex of the convex subarea 5. D8 is between 7 and 10 mm (8 mm). D7 may of course not exceed D8, since such configuration would not enable a convex subarea 8.

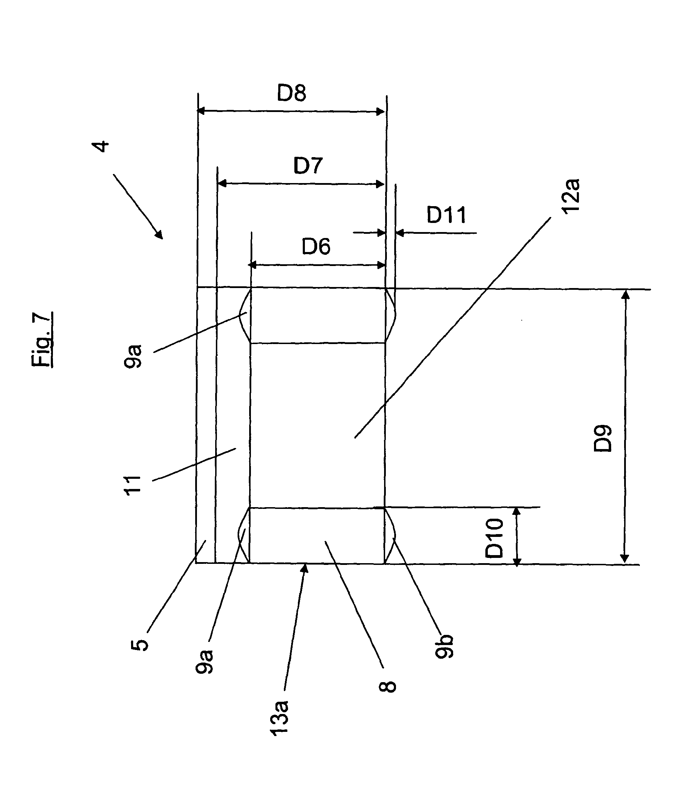

Fig. 7 schematically shows a side view of the sliding element in fig. 6 and a number of denotations referring to data regarding the sliding element.

D9 refers to the measurement of the sliding element 4 in the sliding direction. D9 is between 6 and 10 mm (8 mm).

D10 refers to the measurement of the first gliding means 8 in the sliding direction. D10 is between 2 and 4 mm (3), not counting the gliding means.

D11 refers to the gliding means and is between 0,5 mm and 1,5 mm (0,7 mm).

The number of sliding elements in the roller shutter is preferably between 5 and 25.

The angle α in figs. 6 and 7 depends on D1-D11 and is easy to calculate using basic trigonometry.

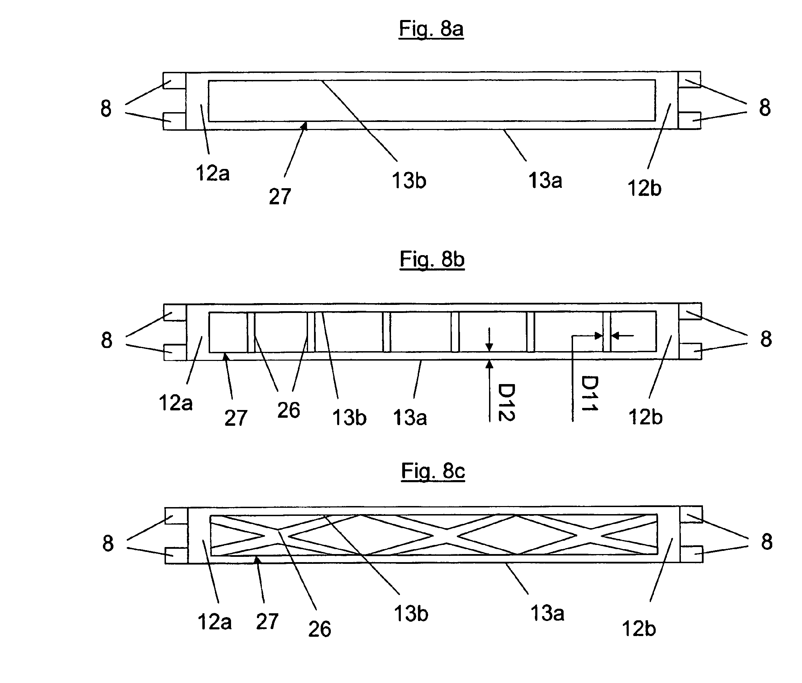

Fig. 8a schematically shows a bottom view of the sliding element in figure 3a according to one embodiment. Figure 8a shows a bottom part 27 of the sliding element with no reinforcement means being arranged between the first and second side walls 13a and 13b.

Fig. 8b schematically shows a bottom view of the sliding element in figure 3a according to another embodiment. In this embodiment reinforcement means 26 has been arranged between the side walls 13a and 13b in order to reinforce the structure of the sliding element 4. The reinforcement means 26 is arranged in the form of rectangular sections. The number of reinforcement means may be between 5 and 25 (13).

Fig. 8c schematically shows a bottom view of the sliding element in figure 3a according to yet another embodiment. In this embodiment reinforcement means 26 has been arranged between the side walls 13a and 13b in order to reinforce the structure of the sliding element 4. The reinforcement means 26 is arranged in the form of diagonal sections crossing each other.

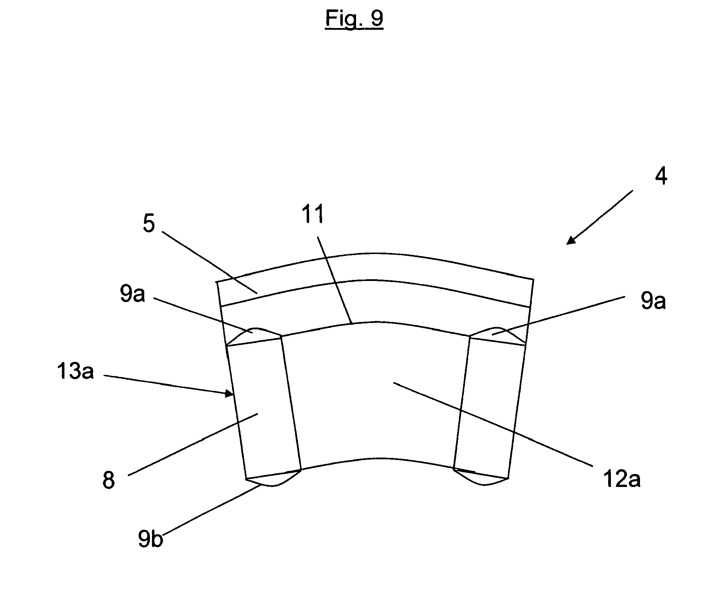

Figure 9 schematically shows a side view of a sliding element 4 according to yet another embodiment of the invention. Figure 9 shows a sliding element arranged for an opening 3 describing a convex surface in the sliding direction. All the subareas 5, 7 and 11 are convex in the sliding direction following the convex curvature of the convex opening (not shown). Figure 9 shows that the first and second side walls 13a and 13b are inclined towards each other along two identical radii (not shown) that define the convex subareas 5, 7, 11 and the convex surface in the sliding direction.

In the above described embodiments, the thickness of the first and second side walls and the reinforcement means is between 0.5 mm and 2 mm (1 mm and 0.7 mm), and the thickness of the first and second end walls is between 0.5 and 3 mm (1 mm). The thickness of the material defining the subareas 5, 7 and 11 is between 0.5-2 mm (1 mm).

The sliding element 4 is preferably made from a light weight plastic material and may be moulded in one piece, for example by extrudation or cast moulding. The plastic material may comprise glass fibre or another suitable fibre for reinforcing the plastic material. One example of a suitable material is PA6GF30, which is a commercial plastic comprising Polyamide 6 reinforced with the addition of 30% glass fibre and graphite. PA6GF30 is, for example, manufactured by PLASTIM Ltd Ashville Business Park, Commerce Road, Staverton, Glos, GL29QJ, United Kingdom.

The roller shutter may withstand a pressure from 80 kilos over the convex surface 6 when the convex surface 6 is made from 10 sliding elements with any combination of the above stated data. This pressure corresponds to a pressure from an adult person placing a hand on the roller shutter (in the screening position) and leaning on the hand with most of his weight.

The invention is not limited to the above embodiments, but may be varied within the scope of the claims. For example, the subareas may be coated with a layer of paint, or a layer of a light metal layer, or a plastic layer, or any desired material. The layers are bonded to the subareas with suitable adhesive substances, for example glue.

## Claims

1. A roller shutter (2) arranged to screen an opening (3) in a storage compartment (1) in a transport device, said opening having an extension in a width direction and a sliding direction where the width direction is essentially perpendicular to the sliding direction, said shutter (2) comprising a number of sliding elements (4) extending in the width direction and in the sliding direction, said sliding elements (4) being assembled in parallel enabling the shutter (2) to be bendable in the sliding direction, **characterized in that** each sliding element (4) comprises a convex subarea (5) being convex in the width direction, as seen from the outside of the compartment, said sliding elements (4) being positioned such that the shutter (2) achieves a convex surface (6) in the width direction when screening the opening (3), the convex surface (6) is arranged to withstand a weight of 80kg in a direction orthogonal to the convex surface (6) when each sliding element is between 80 and 210 mm in the width direction and 6-10 mm in the sliding direction and when the maximum thickness of the sliding element is between 7 and 10 mm and the roller shutter (2) comprises at least ten sliding elements (4)

2. A roller shutter (2) according to claim 1, **characterized in that** each sliding element (4) has first and second end walls (12a, 12b) extending in the sliding direction and a thickness direction and first and second side walls (13a, 13b) extending in the width direction and in the thickness direction, wherein one side wall (13a) of one sliding element (4) is in contact with a side wall (13b) of a parallel sliding element (4) when the shutter (2) screens the opening (3).

3. A roller shutter (2) according to claim 2, **characterized in that** at least one side wall (13a) is arranged with engagement means (21 a) for engaging engagement means (21 b) arranged tin the side wall of (13b) of a parallel sliding element (4) when the shutter (2) screens the opening (3).

4. A roller shutter (2) according to any one of claims 1-3, **characterized in that** each sliding element (4) has two opposing end subareas (7) in the width direction that transitions into the convex subarea (5).

5. A roller shutter (2) according to any one of claims 1-3, **characterized in that** each sliding element (4) has two opposing end subareas (7) in the width direction and that each sliding element (4) has two opposing inclined subareas (11) arranged between the end subareas (7) and the convex subarea (5).

6. A roller shutter (2) according to claim 4 or 5, **characterized in that** each sliding element (4) is equipped with first guiding means (8, 9) extending from the first and second end walls (12a, 12b) in the width direction.

7. A roller shutter (2) according to any one of the previous claims, **characterized in that** the sliding elements (4) are between 80 and 210 mm in the width direction.

8. A roller shutter (2) according to any one of the previous claims, **characterized in that** the maximum thickness of the sliding element (4) is 10 mm.

9. A roller shutter (2) according to any one of the previous claims, **characterized in that** the convex surface (6) is arranged to absorb a surface load acting on the surface and to distribute said load over at least a part of the surface (6) without deformation of said surface (6).

10. A roller shutter (2) according to any one of the previous claims, **characterized in that** the shutter (2) is slidably housed in the storage compartment (1) via second guiding means (10).

11. A roller shutter (2) according to any one of the previous claims, **characterized in that** the storage compartment (1) has a buffer section (16) for hallowing the shutter (2) to be displaced at an angle to the opening (3).

## Patentansprüche

1. Rollverschluss (2), der angeordnet ist, dass er eine Öffnung (3) eines Stauraums (1) in einer Transporteinrichtung verdeckt, wobei die Öffnung eine Ausdehnung in einer Breitenrichtung und einer Gleitrichtung aufweist, bei denen die Breitenrichtung im Wesentlichen senkrecht zur Gleitrichtung ist, wobei der Verschluss (2) eine Anzahl Gleitelemente (4) umfasst, die sich in Breitenrichtung und in Gleitrichtung erstrecken, wobei die Gleitelemente (4) parallel zusammengesetzt sind, so dass es dem Verschluss (2) ermöglicht ist in Gleitrichtung abwinkelbar zu sein,
**dadurch gekennzeichnet, dass**
jedes Gleitelement (4) einen konvexen Unterbereich (5) umfasst, der in Breitenrichtung, wenn von der Außenseite des Raums gesehen, konvex ist, wobei die Gleitelemente (4) derart angeordnet sind, dass der Verschluss (2) eine konvexe Oberfläche (6) in Breitenrichtung erhält, wenn er die Öffnung (3) verdeckt, wobei die konvexe Oberfläche (6) so angeordnet ist, dass sie einem Gewicht von 80 kg in einer Richtung orthogonal zur konvexen Oberfläche (6) widersteht, wenn jedes Gleitelement zwischen 80 und 210 mm in Breitenrichtung und 6-10 mm in Gleitrichtung ist und wenn die Maximaldicke des Gleitelements zwischen 7 und 10 mm ist und der Rollverschluss (2) zumindest zehn Gleitelemente (4) umfasst.

2. Rollverschluss nach Anspruch 1, **dadurch gekennzeichnet, dass** jedes Gleitelement (4) erste und zweite Endwände (12a, 12b) aufweist, die sich in Gleitrichtung und in einer Dickenrichtung erstrecken, und erste und zweite Seitenwände (13a, 13b), die sich in Breitenrichtung und Dickenrichtung erstrecken, wobei eine Seitenwand (13a) eines Gleitelements (4) in Kontakt mit einer Seitenwand (13b) eines parallelen Gleitelements (4) steht, wenn der Verschluss (2) die Öffnung (3) verdeckt.

3. Rollverschluss nach Anspruch 2, **dadurch gekennzeichnet, dass** zumindest eine Seitenwand (13a) mit Eingriffsmitteln (21a) angeordnet ist, zum Eingreifen in Eingriffsmittel (21b), die in der Seitenwand (13b) eines parallelen Gleitelements (4) angeordnet sind, wenn der Verschluss (2) die Öffnung (3) verdeckt.

4. Rollverschluss nach einem der Ansprüche 1 - 3, **dadurch gekennzeichnet, dass** jedes Gleitelement (4) in Breitenrichtung zwei gegenüberliegende Endunterbereiche (7) hat, die in den konvexen Unterbereich (5) übergehen.

5. Rollverschluss nach einem der Ansprüche 1 - 3, **dadurch gekennzeichnet, dass** jedes Gleitelement (4) in Breitenrichtung zwei gegenüberliegende Endunterbereiche (7) hat und dass jedes Gleitelement (4) zwei gegenüberliegende, geneigte Unterbereiche (11) aufweist, die zwischen den Endunterbereichen (7) und den konvexen Unterbereichen (5) angeordnet sind.

6. Rollverschluss nach Anspruch 4 oder 5, **dadurch gekennzeichnet, dass** jedes Gleitelement (4) mit ersten Führungselementen (8, 9) ausgerüstet ist, die sich von ersten und zweiten Endwänden (12a, 12b) in Breitenrichtung erstrecken.

7. Rollverschluss nach einem der vorhergehenden Ansprüche, **dadurch gekennzeichnet, dass** die Gleitelemente (4) in Breitenrichtung zwischen 80 und 210 mm sind.

8. Rollverschluss nach einem der vorhergehenden Ansprüche, **dadurch gekennzeichnet, dass** die maximale Dicke der Gleitelemente (4) 10 mm ist.

9. Rollverschluss nach einem der vorhergehenden Ansprüche, **dadurch gekennzeichnet, dass** die konvexe Oberfläche (6) so angeordnet ist, dass sie eine Oberflächenlast, die auf die Oberfläche wirkt, absorbiert und die Last über zumindest einen Teil der Oberfläche (6) verteilt, ohne die Oberfläche (6) zu verformen.

10. Rollverschluss nach einem der vorhergehenden Ansprüche, **dadurch gekennzeichnet, dass** der Verschluss (2) gleitbar in dem Stauraum (1) mittels zweiten Führungsmitteln (10) aufgenommen ist.

11. Rollverschluss nach einem der vorhergehenden Ansprüche, **dadurch gekennzeichnet, dass** der Stauraum (1) eine Pufferzone (16) aufweist, so das es dem Verschluss ermöglicht ist, in einem Winkel zur Öffnung (3) versetzt zu werden.

## Revendications

1. Volet roulant (2) agencé de manière à obturer une ouverture (3) dans un compartiment de stockage (1) dans un dispositif de transport, ladite ouverture s'étendant dans une direction transversale et une direction de coulissement, dans lequel la direction transversale est sensiblement perpendiculaire à la direction de coulissement, ledit volet (2) comprenant un certain nombre d'éléments coulissants (4) s'étendant dans la direction transversale et dans la direction de coulissement, lesdits éléments coulissants (4) étant assemblés en parallèle, permettant de courber le volet (2) dans la direction de coulissement, **caractérisé en ce que** chaque élément coulissant (4) comprend une zone secondaire convexe (5) qui est convexe dans la direction transversale, comme vu de l'extérieur du compartiment, lesdits éléments coulissants (4) étant positionnés de telle sorte que le volet (2) présente une surface convexe (6) dans la direction transversale lorsqu'il obture l'ouverture (3), la surface convexe (6) est agencée afin de résister à un poids de 80 kg dans une direction orthogonale à la surface convexe (6) lorsque chaque élément coulissant est compris entre 80 et 210 mm dans la direction transversale et entre 6 et 10 mm dans la direction de coulissement et lorsque l'épaisseur maximum de l'élément coulissant est comprise entre 7 et 10 mm et que le volet roulant (2) comprend au moins dix éléments coulissants (4).

2. Volet roulant (2) selon la revendication 1, **caractérisé en ce que** chaque élément coulissant (4) comporte des première et deuxième parois d'extrémité (12a, 12b) s'étendant dans la direction de coulissement et suivant l'épaisseur et des première et deuxième parois latérales (13a, 13b) s'étendant dans la direction transversale et suivant l'épaisseur, dans lequel une paroi latérale (13a) d'un élément coulissant (4) est en contact avec une paroi latérale (13b) d'un élément coulissant parallèle (4) lorsque le volet (2) obture l'ouverture (3).

3. Volet roulant (2) selon la revendication 2, **caractérisé en ce qu'**au moins une paroi latérale (13a) comporte des moyens de couplage (21a) destinés à se coupler avec des moyens de couplage (21b) agencés sur la paroi latérale (13b) d'un élément coulissant parallèle (4) lorsque le volet (2) obture l'ouverture (3).

4. Volet roulant (2) selon l'une quelconque des revendications 1 à 3, **caractérisé en ce que** chaque élément coulissant (4) comporte deux zones secondaires d'extrémité opposées (7) dans la direction transversale qui présentent une transition dans la zone secondaire convexe (5).

5. Volet roulant (2) selon l'une quelconque des revendications 1 à 3, **caractérisé en ce que** chaque élément coulissant (4) comporte deux zones secondaires d'extrémité opposées (7) dans la direction transversale et **en ce que** chaque élément coulissant (4) comporte deux zones secondaires inclinées opposées (11) agencées entre les zones secondaires d'extrémité (7) et la zone secondaire convexe (5).

6. Volet roulant (2) selon la revendication 4 ou 5, **caractérisé en ce que** chaque élément coulissant (4) est équipé de premiers moyens de guidage (8, 9) s'étendant des première et deuxième parois d'extrémité (12a, 12b) dans la direction transversale.

7. Volet roulant (2) selon l'une quelconque des revendications précédentes, **caractérisé en ce que** les éléments coulissants (4) sont compris entre 80 et 210 mm dans la direction transversale.

8. Volet roulant (2) selon l'une quelconque des revendications précédentes, **caractérisé en ce que** l'épaisseur maximum de l'élément coulissant (4) est de 10 mm.

9. Volet roulant (2) selon l'une quelconque des revendications précédentes, **caractérisé en ce que** la surface convexe (6) est agencée de manière à absorber une charge superficielle agissant sur la surface et à répartir ladite charge sur au moins une partie de la surface (6) sans déformation de ladite surface (6).

10. Volet roulant (2) selon l'une quelconque des revendications précédentes, **caractérisé en ce que** le volet (2) est contenu de manière à pouvoir coulisser dans le compartiment de stockage (1) par l'intermédiaire de seconds moyens de guidage (10).

11. Volet roulant (2) selon l'une quelconque des revendications précédentes, **caractérisé en ce que** le compartiment de stockage (1) comporte une zone tampon (16) afin de permettre le déplacement du volet (2) sous un certain angle par rapport à l'ouverture (3).
